# EUROPEAN PATENT SPECIFICATION

(11) **EP 1 571 539 B1**
(45) Date of publication and mention of the grant of the patent: **19.10.2011**
(21) Application number: 05004485.8
(22) Date of filing: 01.03.2005
(51) Int. Cl.: G06F 3/033

(54) **Mobile terminal with erroneous operation eliminated**
Mobiles Endgerät , fähig ein Ereignis einer fehlerhaften Wirkung zu verhindern
Terminal mobile capable d'éviter une occurrence d'opération erronée

(30) Priority: 01.03.2004 JP 2004056729
(43) Date of publication of application: 07.09.2005
(73) Proprietor: NEC Corporation, Minato-ku Tokyo 108-8001 (JP)
(72) Inventor: Sato, Ryohei, Kamikawamachi Kodama-gun Saitama (JP)
(74) Representative: Glawe, Delfs, Moll

(56) References cited:
- EP-A- 1 132 857
- WO-A-02/100074
- PATENT ABSTRACTS OF JAPAN vol. 2003, no. 09, 3 September 2003 (2003-09-03) & JP 2003 131800 A (ALPS ELECTRIC CO LTD), 9 May 2003 (2003-05-09)
- PATENT ABSTRACTS OF JAPAN vol. 2003, no. 02, 5 February 2003 (2003-02-05) & JP 2002 313188 A (CITIZEN ELECTRONICS CO LTD), 25 October 2002 (2002-10-25)

## Description

### Background of the Invention

### 1. Field of the Invention

The invention relates to a mobile terminal, and, specifically to a mobile terminal having a sliding type pointing device section which has a pushing type determination key in the center of the pointing device section.

### 2. Description of the Background Art

In a mobile terminal such as a mobile phone, its operation section is limited to a small size due to demand for smaller/lighter terminals. Thus, a small pointing device is used for multi-input operation as disclosed in Japanese Laid Open Patent Application (JP-P2003-84916A). This conventional pointing device has a movable electrode slidable in a horizontal direction and movable in a vertical direction. When the movable electrode is slid, the slide direction and the travel distance of the electrode in the slide direction are detected. Also, when the movable electrode is pushed, a switching operation is carried out.

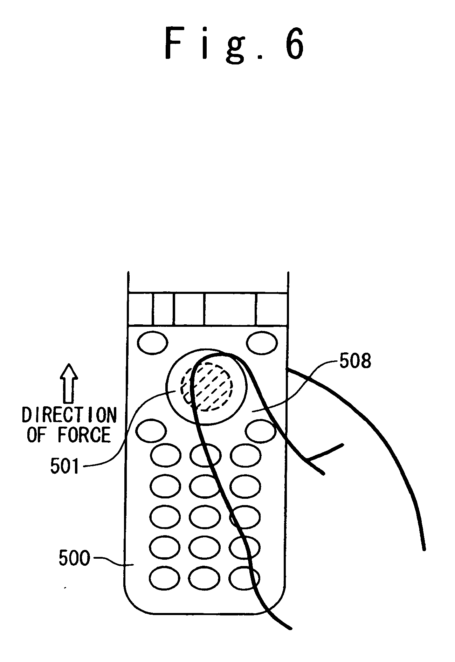

If such a pointing device is applied to the mobile phone, the pointing device is provided as a sliding pointing device section 501 on the top surface of the housing of the mobile phone, as shown in Fig. 6. This pointing device section 501 is slidable in a direction parallel to the figure plane and also can be pushed in a direction perpendicular to the figure plane.

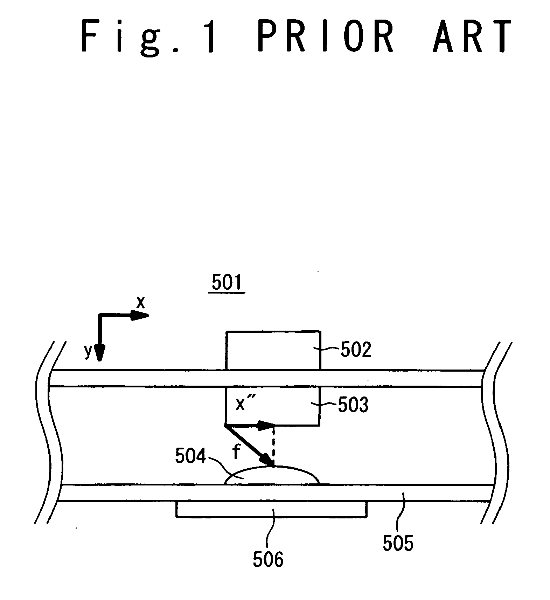

Fig. 1 is a block diagram of an example of the pointing device section 501. In Fig. 1, the pointing device 501 is composed of an operation section 502 movable in horizontal and vertical directions, a movable contact section 503 moving in conjunction with the movement of the operation section 502, a fixed contact section 504 provided on a printed circuit board 505, and a sensor section 506.

The pointing device section 501 is used for cursor movement. When the operation section 502 is slid horizontally, the sensor section 506 detects a travel distance of the operation section 502. Also, when the operation section 502 is pushed down vertically (in y direction), the movable contact section 503 is also moved in the same direction and contacts the fixed contact section 504. Thus, the switching section 504 is turned on. In this way, the operation section 502 serves as a determination key.

By the way, when the pointing device section 501 is operated, the operation section 502 is used to slide it by a thumb 508, as shown in Fig. 6. When the determination key arranged in the center of the operation section 502 should be pushed, force may be applied to a slightly upward direction (in the arrow direction in Fig. 6). The operation section 502 is slid in the horizontal direction because of the force, and the horizontal movement of the operation section 502 is detected, so that a cursor moves regardless that a use does not intend to move the cursor. As such, malfunction of the determination key may occur.

In other words, in Fig. 1, it is supposed that the operation section 502 is obliquely pushed with the force angularly shifted from the vertical direction (in direction f in Fig. 1). Until the operation section 502 is pushed obliquely and the contact section 503 contacts the switching section 504, the operation section 502 slightly slides in the horizontal direction, and the sensor section 506 detects the travel distance x" of the operation section 502 in the horizontal. If the travel distance x" is less than a predetermined distance, the cursor is not moved. However, when the travel distance x" exceeds the predetermined distance, the cursor moves. In such a case, a malfunction may occur that a different selection item from a desired selection item by a user is selected.

In conjunction with the above description, a multi-direction switch is disclosed in Japanese Laid Open Patent Application (JP-P2002-313188A). In this conventional example, a plurality of switch contacts are formed on a circuit board. A plunger is arranged above them to have arms extending from a center into an outward direction. They are covered by a case.
The case has holes along the contour of the arms of plunger in the surface to allow the arms to be operably exposed. Also, the case has a hold section to cover a part of the plunger and to hold the plunger not to drop out. One of the switch contacts is arranged on a center portion of the plunger and the other switch contacts are arranged at a tip portion of each of the arms. When the plunger is moved downwardly in a vertical direction, the switch contact on the center portion operates, and when the plunger is move downwardly in an inclined state, the switch contact at the tip portion operates. Thus, either of the switch contacts selectively operates according to the change of a posture of plunger. An axis for key top installation is formed on the center above the plunger. A return spring is arranged underside the plunger to stabilize the posture of plunger.

Also, a coordinate input device is disclosed in Japanese Laid Open Patent Application (JP-P2003-84916A). In this conventional example, a housing has a lower case and an upper case opposing to each other to form a cavity section therebetween. A slidable electrode is provided in a sandwiched state by the upper case and the lower case. An elastic member is provided in the cavity section to elastically bias the slidable electrode. A plurality of fixed electrodes are provided for a portion of the upper or lower case in one direction to be distributedly arranged in a circumferential direction. A conductive member is provided for a portion of the upper or lower case in the other direction. When the movable electrode is slid against the elastic member, a capacitance between the fixed electrode and the conductive member changes. A movement direction and movement quantity of the movable electrode are detected based on the change of the capacitance.

Also, a coordinate input device is disclosed in Japanese Laid Open Patent Application (JP-P2003-131800A). In this conventional example, a case has a cavity section. A plurality of fixed electrodes are provided for the bottom of the case. A slider is provided movably in a horizontal direction along an operation axis. A movable electrode of metal is form in the case apart from the fixed electrodes. The movable electrode is bent by sliding the slider along the operation axis. The movement of the slider is detected based on the change of a capacitance between the movable electrode and the fixed electrode.

Also, a composite switch structure is disclosed in Japanese Laid Open Patent Application (JP-P2003-233458A). This conventional example is composed of a coordinate input unit and a step input unit. The coordinate input unit has a coordinated input operation section which can specify coordinate positions continuously over all the directions of 360 degrees. The step input unit has a plurality of pushing sections, each of which can specify a specific coordinate position in a specific direction. The coordinate input operation section and the pushing section can be individually operated. The coordinate input unit is provided with a convex globular resistance surface which is rotatable on a variable resistance detecting circuit provided onto a substrate, a bendable dome shaped main body to support the convex globular resistance surface apart from the variable resistance detecting circuit in an unuse state, and the coordinate input operation section to move a center external surface of the dome shaped main body in conjunction with the convex globular resistance surface. A coordinate position is read by using the electric characteristic of coordinate input function part using the electric characteristic the variable resistance detecting circuit which contacts the convex globular resistance surface.

Also, an input device is disclosed in Japanese Laid Open Patent Application (JP-A-Heisei 10-207616). In this conventional example, the input device is composed of a movable body to slide on a plane or a curved surface when force is applied, a reflection section provided for the movable body, a light emitting device and a plurality of light receiving elements. A sensor section detects the movement of the movable body based on a detection signal of the light receiving elements to receive the light emitted from the light emitting device and reflected by the refraction section.

Also, an operation apparatus is disclosed in Japanese Laid Open Patent Application (JP-P2003-523585A). In this conventional example, the operation apparatus has a control button inclinable to a housing of the operation apparatus.
For example, the operation apparatus has a switch element operating in response to the control button by inclining the switch element. The control button has a boss provided in a center to project downwardly, and supported by a spring. The boss has a round bottom and is inclinably supported to an inclinable shaft of the housing. Preferably, the boss is movable along a limited portion of the shaft to an operation of the spring. A pair of projections protrudes from the boss to the lateral direction to the direction of the shaft. The plurality of switch elements are arranged for the housing apart from the lower side of the control button. One of the switch elements of a first pair is operated by the side surface of the shaft when the shaft is inclined. The switch elements of a second pair are operated by the projections when the control button and the boss are inclined around the shaft in a direction. The switch elements of a third pair are operated by the boss when the boss is slid.

### Summary of the Invention

An object of the present invention is to provide a mobile terminal in which a malfunction of selection of an unintended item can be prevented while a button with multi-function is used.

In an aspect of the present invention, a mobile terminal includes a pointing device section, a sensor section and a switch section. The pointing device section includes an operation section provided for a first board to be movable in a horizontal direction parallel to the first board and in a vertical direction orthogonal to the first board, and a contact section configured to move in conjunction with a movement of the operation section. The sensor section is provided for a second board below the first board to oppose to the contact section and is configured to detect the movement of the operation section in the horizontal direction. The switch section is provided for the second board to oppose to the contact section and is configured to detect the movement of the operation section in the vertical direction. The contact section has a surface portion opposing to the switch section and inclined with respect to the first board.

Here, the mobile terminal may include a first housing in which a speaker is provided, a second housing in which a microphone and a key arrangement section are provided, and a link mechanism provided between the first and second housing. In this case, the mobile terminal may include a first housing in which a speaker is provided, a second housing in which a microphone is provided, and a link mechanism provided between the first and second housing. The switch section has a dome-like shape, and the pointing device section is provided for a portion of the second housing near to the first housing. It is preferable that the length of the contact section in the vertical direction on a side near to the first housing is shorter than a length thereof in the vertical direction on a side distant from the first housing.

Also, the switch section may have a dome-like shape, and the contact section may have a recessed surface from a circumferential portion. In this case, it is preferable that a depth of the recess is smaller than a height of the switch section.

Also, the contact switch is provided concentrically with the switch section when the pointing device section is not moved. In this case, it is preferable that a width of the contact section in the horizontal direction is substantially same as that of the switch section.

Also, the contact section may be formed such that the horizontal movement of the operation section is neglected when the operation section is pushed obliquely while the operation section is intended to be moved in the vertical direction. Also, the mobile terminal may further include a display section configured to display items and a cursor and a determination section. The determination section determines a quantity of the movement of the operation section in the horizontal direction from an output from the sensor section, and determines that one of the items is selected when the switch section is turned on in response to the movement of the operation section in the vertical direction and when the quantity of the movement of the operation section in the horizontal direction is less than a predetermined quantity.

According to the present invention, when a contact area opposed to the switching section of the contract section is shaped into a plane inclined to the surface of the switching section, the operation section is obliquely pushed, and accordingly the contact section is pushed at an angle, horizontal distance can be controlled in relation to load of the operation section in an oblique direction, thus preventing malfunction, because horizontal distance till the contact section contacts the switching section can be made smaller than the case in which the contact section mentioned above is set parallel to the surface of the switching section.

In addition, according to this invention, since the contact section is such that the contact area opposed to the switching section may be shaped into a plane having a plurality of inclined planes inclined to the surface of the switching section from a plurality of directions, load in an oblique direction of the operation section can control horizontal distance to not only one direction but also a more than one direction, thus further preventing malfunction.

In addition, according to this invention, since a mobile terminal has been applied, comprising a display section that displays various types of information, and a means for moving/deciding that moves the cursor being displayed on the display section in conjunction with movement of the operation section, and determines on information the cursor instructs in the display section when the operation section is pushed in a vertical direction, any malfunction due to cursor movement when the determination key is pushed can be prevented.

### Brief description of the drawings

Fig. 1 is a block diagram of one example of a pointing device section in the conventional example;
Fig. 2 is an appearance diagram of the present invention;
Fig. 3 is a block diagram of a pointing device section used in a mobile terminal according to a first embodiment of the present invention;
Fig. 4 is a block diagram of the pointing device section used in the mobile terminal according to a second embodiment of the present invention;
Fig. 5 is a block diagram of the pointing device section used in the mobile terminal according to a third embodiment of the present invention; and
Fig. 6 is a block diagram of one example of an operation of the pointing device section.

### Description of the Preferred Embodiments

Hereinafter, a mobile terminal of the present invention will be described in detail with reference to the attached drawings.

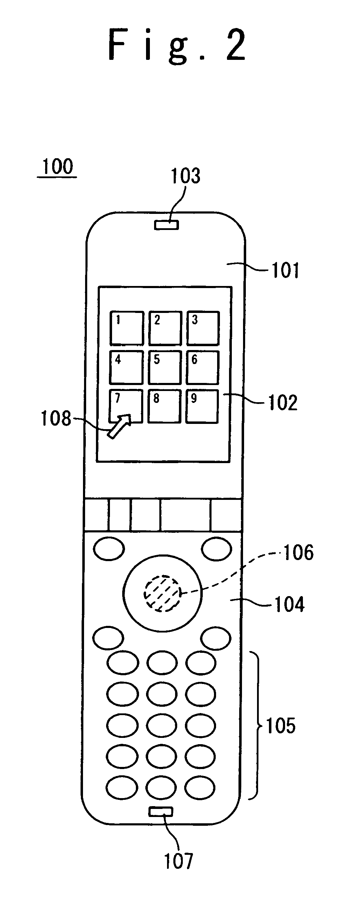

Fig. 2 is a diagram showing an appearance of the mobile terminal according to the first embodiment of the present invention. The mobile terminal in the first embodiment is a mobile phone 100. A housing 101 is provided with a display section 102 and a speaker 103, and a housing 104 is provided with a key arrangement section 105 composed of a plurality of alpha-numeric keys (buttons), a pointing device section 106, and a microphone 107.

The display section 102 displays various types of information by means of a display unit such as a liquid crystal panel. The key arrangement section 105 is composed of alpha-numeric keys and used for operations such as call origination from the mobile phone 100, entry of characters, reception of a call, and a turning ON/OFF operation of a power supply. The pointing device section 106 can be operated or slid in a horizontal direction with respect to the surface of the housing 104 in response to an operation of a user. A cursor 108 is moved on the display section 102 based on the movement of the pointing device, and is used for selection of one of menu items. A pushing type of switch is provided as a determination switch in the central portion of the pointing device section 106. When the switch is pushed in a direction perpendicular to the surface of the housing 104, a determination operation is carried out.

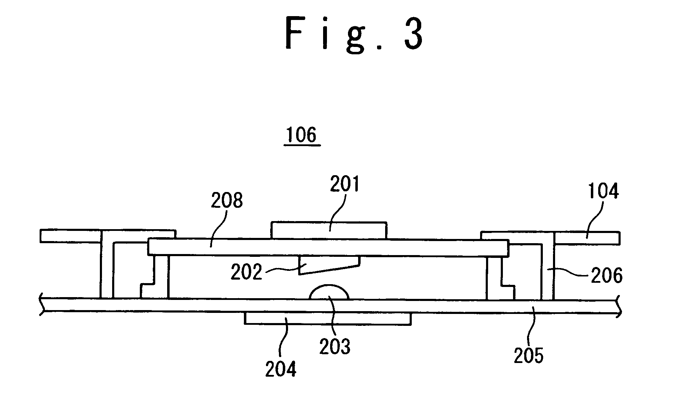

Fig. 3 is a block diagram of the pointing device section 106 in the first embodiment shown in Fig. 2. In Fig. 2, the pointing device section 106 is composed of an operation section 201 which can be moved in horizontal and vertical directions with respect to the surface of the housing 104, a contact section 202 which is moved in conjunction with the movement of the operation section 201, a switch section 203 provided on a printed circuit board 205, and a sensor section 204. Here, the operation section 201 corresponds to a black circle in the center of the pointing device section 106 in Fig. 2, and a board section 208 lower than the top face of the housing 104 in the periphery of the operation section 201 corresponds to a circular portion of larger diameter surrounding the black circle. In the first embodiment, the contact section is thinner than the operation section 201.

Now, when the operation section 201 is slid in the horizontal direction parallel to the surface of the housing 104, the sensor section 204 detects a travel distance of the operation section 201. A Hall effect IC is used for the sensor section 204 to detect change of magnetic field due to the operation section 201 (contact section 202), and it is commercially available and well known to a skilled person in the art. Since the Hall effect IC does not have direct relation to this invention, the detailed description of it is omitted. The detected travel distance by the sensor section 204 is used as data for cursor movement by a determination section (not shown).

The switch section 203 has a dome shape, and is turned on when the operation section 201 is pushed in the perpendicular direction to the surface of the housing 104 and the contact section 202 contacts the switch section 203 in conjunction with the movement of the operation section 201. The switching section 23 is mainly used as a determination key. A frame 206 supports the operation section 201, and also specifies a movable range of the operation section 201.

In the first embodiment, the contact section 202 is provided to have an appropriate angle. The length in the vertical direction of the contact section 202 on the key arrangement section 105 is longer than the length in the vertical direction of the contact section 202 on the display section 102. In other words, the contact surface of the contact section 202 is formed to be inclined to the surface of the board 205. As described below, this structure restricts a horizontal movement in relation to force angularly shifted from the perpendicular direction when the determination key is pushed.

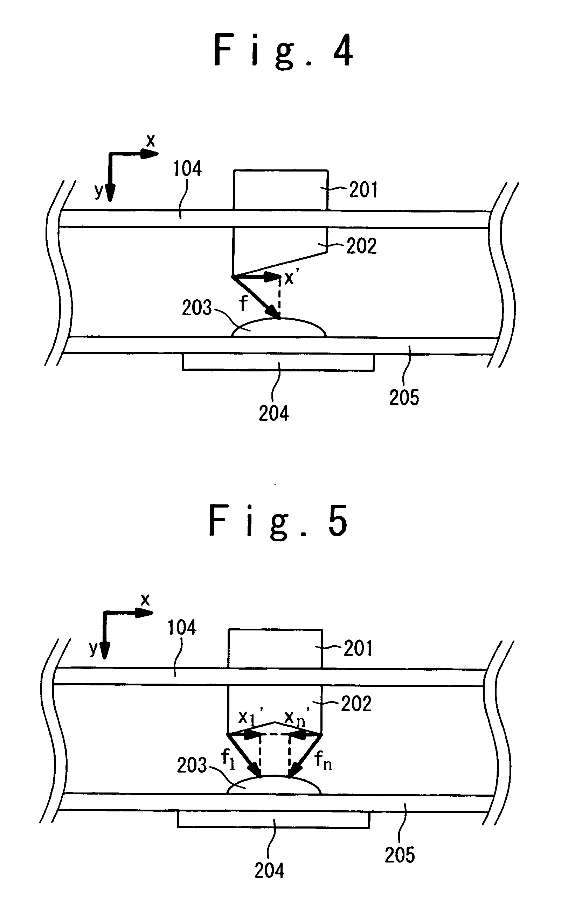

Next, the pointing device section 106 according to the second embodiment of the present invention will be described with reference to Fig. 4. In Fig. 4, same symbols are assigned to the same components as those in Fig. 3, and description thereof is omitted herein. A basic operation in the second embodiment shall not be different from that of the conventional pointing device as shown in Fig. 1. In Fig. 4, the contact section 202 has almost the same thickness as the operation section 201. The contact section 202 is provided to have an appropriate angle to a horizontal direction parallel to the surface of the housing 104 and the printed circuit board 205.
For this reason, it is supposed that the operation section 201 is pushed obliquely and angularly shifted from the perpendicular direction to the surface of the board 104, i.e., in a direction f of Fig. 4 with the force shown in Fig. 6. In this case, the operation section 201 slightly slides to the horizontal direction until the operation section 201 is pushed contacts the switch section 203. At this time, the sensor section 204 detects a travel distance x' in the horizontal direction parallel to the surfaces of the housing 104 and the printed circuit board 205. However, the travel distance x' is smaller than the travel distance x" as shown in Fig. 1, when the force is same as in the conventional case. Therefore, a possibility that it is determined by the determination section (not shown) that this travel distance x' is less than a predetermined quantity will considerably increase. Through this effect of restricting the travel distance, malfunction due to the cursor movement when the determination key is pushed to be considerably reduced or removed.

It should be noted that the contact section 202 has such a shape that the travel distance of the contact section 202 when the operation section 201 is pushed straightly downward with respect to the surfaces of the housing 104 and the printed circuit board 205 (in a Y axis direction) will not almost change from the conventional example. Therefore, operation feeling is not different from the conventional example.

Next, the third embodiment of the present invention will be described. Fig. 5 shows a block diagram of the pointing device section of the mobile terminal in the third embodiment. In this figure, the same symbols are assigned to the same components of Fig. 4, description thereof is omitted. In Fig. 5, the contact section 301 that moves in conjunction with the operation section 201 is formed to have inclined contact surface from multiple directions to the surface of the printed circuit board 205. In other words, the contact section 202 has the same pillar shape as the operation section 201 and the opposing plane of the contact section to the switch section 203 is formed to have a recess surface from multiple directions. The opposing plane may have a round recess surface in correspondence to the switch section 203. The recess depth is preferably shallower than the height of the switch section 203.

According to the third embodiment, a horizontal travel distance to be detected by the sensor section 204 when the operation section 201 is obliquely pushed is expressed as x1' or xn' depending on an obliquely pushed direction. Since the distance is smaller than the horizontal travel distance in the conventional example, the erroneous detection of the horizontal movement of the operation section when the determination key is pushed can be reduced irrespective of the direction of the pushing operation.

The present invention is not limited to the embodiments described above, but applicable to every portable terminal, such as a laptop and other portable information terminals other than mobile phones that are provided with the pointing device section, in which the cursor is moved in conjunction with horizontal movement of the operation section, and content of the cursor position is determined by being pushed in the perpendicular direction.

## Claims

1. A mobile terminal comprising:
a pointing device section (106) which comprises:
an operation section (201) provided for a first board to be movable in a horizontal direction parallel to said first board and in a vertical direction orthogonal to said first board, and
a contact section (202) configured to move in conjunction with a movement of said operation section;
a sensor section (204) provided for a second board below said first board to oppose to said contact section and configured to detect the movement of said operation section in the horizontal direction; and
a switch section (203) provided for said second board to oppose to said contact section and configured to detect the movement of said operation section in the vertical direction,
wherein said contact section has a surface portion opposing to said switch section and inclined with respect to said first board.

2. The mobile terminal according to claim 1, wherein said mobile terminal comprises a first housing (101) in which a speaker is provided, a second housing (104) in which a microphone and a key arrangement section are provided, and a link mechanism provided between said first and second housing.

3. The mobile terminal according to claim 2, wherein said switch section has a dome-like shape,
said pointing device section is provided for a portion of said second housing near to said first housing, and
a length of said contact section in the vertical direction on a side near to said first housing is shorter than a length thereof in the vertical direction on a side distant from said first housing.

4. The mobile terminal according to claim 1 or 2, wherein said switch section has a dome-like shape, and
said contact section has a recessed surface from a circumferential portion.

5. The mobile terminal according to claim 4, wherein a depth of the recess is smaller than a height of said switch section.

6. The mobile terminal according to any of claims 1 to 5, wherein said contact section is provided concentrically with said switch section when said pointing device section is not moved.

7. The mobile terminal according to claim 6, wherein a width of said contact section in the horizontal direction is substantially same as that of said switch section.

8. The mobile terminal according to any of claims 1 to 7, wherein said contact section is formed such that the horizontal movement of said operation section is neglected when said operation section is pushed obliquely while said operation section is intended to be moved in the vertical direction.

9. The mobile terminal according to claim 8, further comprising:
a display section (102) configured to display items and a cursor; and
a determination section configured to determine a quantity of the movement of said operation section in the horizontal direction from an output from said sensor section, and to determine that one of said items is selected when said switch section is turned on in response to the movement of said operation section in the vertical direction and when the quantity of the movement of said operation section in the horizontal direction is less than a predetermined quantity.

## Patentansprüche

1. Mobilanschluss mit:
einem Zeigervorrichtungsabschnitt (106), der aufweist:
einen Bedienungsabschnitt (201), der für eine erste Platte vorgesehen ist, um in einer Horizontalrichtung parallel zu der ersten Platte und in einer Vertikalrichtung orthogonal zu der ersten Platte bewegt zu werden, und
einen Kontaktabschnitt (202), der ausgebildet ist, um sich in Verbindung mit einer Bewegung des Bedienungsabschnittes zu bewegen,
einen Sensorabschnitt (204), der für eine zweite Platte unterhalb der ersten Platte vorgesehen ist, um dem Kontaktabschnitt gegenüber zu liegen und ausgebildet ist, die Bewegung des Bedienungsabschnittes in der Horizontalrichtung zu erfassen,
und einen Schaltabschnitt (203), der für die zweite Platte vorgesehen ist, um dem Kontaktabschnitt gegenüber zu liegen und ausgebildet ist, um eine Bewegung des Bedienungsabschnittes in der Vertikalrichtung zu erfassen,
wobei der Kontaktabschnitt einen Oberflächenteil aufweist, der dem Schaltabschnitt gegenüber liegt und mit Bezug auf die erste Platte geneigt ist.

2. Mobilanschluss nach Anspruch 1, wobei der Mobilanschluss ein erstes Gehäuse (101) aufweist, in dem ein Lautsprecher vorgesehen ist, ein zweites Gehäuse (104), in dem ein Mikrophon und ein Tastenanordnungsabschnitt vorgesehen sind, und einen Verbindungsmechanismus, der zwischen dem ersten und dem zweiten Gehäuse vorgesehen ist.

3. Mobilanschluss nach Anspruch 2, wobei der Schaltabschnitt eine kuppelartige Form aufweist,
der Zeigervorrichtungsabschnitt für einen Teil des zweiten Gehäuses nahe dem ersten Gehäuse vorgesehen ist, und
eine Länge des Kontaktabschnittes in der Vertikalrichtung an einer Seite nahe des ersten Gehäuses kürzer ist als seine Länge in der Vertikalrichtung an einer Seite, die von dem ersten Gehäuse beabstandet ist.

4. Mobilanschluss nach Anspruch 1 oder 2, wobei der Schaltabschnitt eine kuppelartige Form aufweist und
der Kontaktabschnitt von einem Umfangsteil eine ausgenommene Oberfläche aufweist.

5. Mobilanschluss nach Anspruch 4, wobei eine Tiefe der Ausnehmung geringer ist als eine Höhe des Schaltabschnitts.

6. Mobilanschluss nach einem der Ansprüche 1 bis 5, wobei der Kontaktabschnitt konzentrisch mit dem Schaltabschnitt vorgesehen ist, wenn der Zeigervorrichtungsabschnitt nicht bewegt wird.

7. Mobilanschluss nach Anspruch 6, wobei eine Breite des Kontaktabschnittes in der Horizontalrichtung im Wesentlichen die selbe ist wie die des Schaltabschnitts.

8. Mobilanschluss nach einem der Ansprüche 1 bis 7, wobei der Kontaktabschnitt derart ausgebildet ist, dass die Horizontalbewegung des Bedienungsabschnittes ignoriert wird, wenn der Bedienungsabschnitt schräg geschoben wird, während beabsichtigt ist, den Bedienungsabschnitt in der Vertikalrichtung zu bewegen.

9. Mobilanschluss nach Anspruch 8 mit ferner:
einem Anzeigeabschnitt (102), der ausgebildet ist, um Elemente und einen Cursor anzuzeigen, und
einem Bestimmungsabschnitt, der ausgebildet ist, eine Quantität der Bewegung des Bedienungsabschnittes in der Horizontalrichtung von einer Ausgabe von dem Sensorabschnitt zu erfassen und zu erfassen, dass eins der Elemente ausgewählt wird, wenn der Schaltabschnitt eingeschaltet wird, in Abhängigkeit von der Bewegung des Bedienungsabschnittes in der Vertikalrichtung und wenn der Betrag der Bewegung des Bedienungsabschnittes in der Horizontalrichtung kleiner ist als ein vorgegebener Betrag.

## Revendications

1. Terminal mobile, comprenant :
une section dispositif de pointage (106) qui comprend :
une section de fonctionnement (201) prévue pour une première carte pour être mobile dans une direction horizontale parallèle à ladite première carte et dans une direction verticale orthogonale à ladite première carte, et
une section de contact (202) configurée pour se déplacer conjointement avec un mouvement de ladite section de fonctionnement ;
une section capteur (204) prévue pour une seconde carte en dessous de ladite première carte pour s'opposer à ladite section de contact et configurée pour détecter le mouvement de ladite section de fonctionnement dans la direction horizontale ; et
une section commutateur (203) prévue pour ladite seconde carte pour s'opposer à ladite section de contact et configurée pour détecter le mouvement de ladite section de fonctionnement dans la direction verticale,
dans lequel ladite section de contact comporte une partie surface en face de ladite section commutateur et inclinée par rapport à ladite première carte.

2. Terminal mobile selon la revendication 1, dans lequel ledit terminal mobile comprend un premier boîtier (101) dans lequel un haut-parleur est prévu, un second boîtier (104) dans lequel un microphone et une section agencement de touches sont prévus, et un mécanisme de liaison prévu entre lesdits premier et second boîtiers.

3. Terminal mobile selon la revendication 2, dans lequel ladite section commutateur présente une forme bombée,
ladite section dispositif de pointage est prévue pour une partie dudit second boîtier près dudit premier boîtier, et
une longueur de ladite section de contact dans la direction verticale sur un côté près dudit premier boîtier est plus courte qu'une longueur de celle-ci dans la direction verticale sur un côté éloigné dudit premier boîtier.

4. Terminal mobile selon la revendication 1 ou 2, dans lequel ladite section commutateur présente une forme bombée, et ladite section de contact comporte une surface évidée depuis une partie circonférentielle.

5. Terminal mobile selon la revendication 4, dans lequel une profondeur de l'évidement est inférieure à une hauteur de ladite section commutateur.

6. Terminal mobile selon une quelconque des revendications 1 à 5, dans lequel ladite section de contact est prévue de façon concentrique avec ladite section commutateur lorsque ladite section dispositif de pointage n'est pas déplacée.

7. Terminal mobile selon la revendication 6, dans lequel une largeur de ladite section de contact dans la direction horizontale est sensiblement identique à celle de ladite section commutateur.

8. Terminal mobile selon une quelconque des revendications 1 à 7, dans lequel ladite section de contact est formée de sorte que le mouvement horizontal de ladite section de fonctionnement soit négligé lorsque ladite section de fonctionnement est poussée de façon oblique alors que ladite section de fonctionnement est prévue pour être déplacée dans la direction verticale.

9. Terminal mobile selon la revendication 8, comprenant en outré :
une section d'affichage (102) configurée pour afficher des articles et un curseur ; et
une section de détermination configurée pour déterminer une quantité du mouvement de ladite section de fonctionnement dans la direction horizontale à partir d'une sortie de ladite section capteur, et pour déterminer qu'un desdits articles est sélectionné lorsque ladite section commutateur est allumée en réponse au mouvement de ladite section de fonctionnement dans la direction verticale et lorsque la quantité du mouvement de ladite section de fonctionnement dans la direction horizontale est inférieure à une quantité prédéterminée.
